# EUROPÄISCHE PATENTSCHRIFT

(11) **EP 2 338 671 B1**
(45) Veröffentlichungstag und Bekanntmachung des Hinweises auf die Patenterteilung: **04.04.2018**
(21) Anmeldenummer: 10015197.6
(22) Anmeldetag: 01.12.2010
(51) Int. Cl.: B29C 73/16, B29L 30/00

(54) **Vorrichtung zum Einbringen von Luft und/oder Abdichtmittel in einen Reifen**
Device for inserting air and/or sealant into a tyre
Dispositif d'introduction d'air et/ou de moyens d'étanchéification dans un pneu

(30) Priorität: 23.12.2009 DE 102009060272
(43) Veröffentlichungstag der Anmeldung: 29.06.2011
(73) Patentinhaber: Sumitomo Rubber Industries, Ltd., Kobe-shi Hyogo-ken (JP)
(72) Erfinder: Eckhardt, Arnold, 63691 Ranstadt (DE)
(74) Vertreter: Manitz Finsterwald Patentanwälte PartmbB

(56) Entgegenhaltungen:
- DE-A1- 10 106 468
- DE-A1-102007 003 667
- DE-U1-202007 016 242
- US-A1- 2003 056 851

## Beschreibung

Die vorliegende Erfindung betrifft eine Vorrichtung zum Einbringen von Luft und/oder Abdichtmittel in einen Reifen, insbesondere Kraftfahrzeugreifen, mit einem Behälter für das Abdichtmittel, welcher einen Einlass und einen Auslass aufweist, wobei der Auslass mit einem Schlauch verbunden oder verbindbar ist, dessen anderes Ende mit dem zu befüllenden Reifen verbindbar ist, und einem Druckerzeugungsmittel, insbesondere einer elektrischen Pumpe oder einem Kompressor, das mittels eines Umschaltventils wahlweise mit dem Einlass des Behälters oder mit einem Schlauch verbindbar ist, dessen anderes Ende mit dem zu befüllenden Reifen verbindbar ist.

Eine derartige Vorrichtung kann als so genanntes Pannenset als Ersatz für ein Reserverad auf einem Kraftfahrzeug mitgeführt werden. Aufgrund des Umschaltventils können solche Pannensets entweder nur zum Aufpumpen eines Reifens oder zum Abdichten und anschließenden Aufpumpen eines Reifens verwendet werden. Je nachdem, ob ein Reifen nur aufgepumpt oder sowohl abgedichtet als auch aufgepumpt werden soll, wird von einem Benutzer entweder der mit dem Behälter verbundene Schlauch oder der mit dem Druckerzeugungsmittel verbundene Schlauch an das Ventil des Reifens angeschlossen. Dabei besteht das Problem, dass der Benutzer einerseits das Umschaltventil in die richtige Position stellen muss und gleichzeitig den richtigen Schlauch, also entweder den Luftförderschlauch oder Abdichtmittelschlauch, mit dem Reifen verbinden muss. Es kann daher zur Verbindung zwischen dem Druckerzeugungsmittel und dem zu befüllenden Reifen einerseits sowie zwischen dem Auslass des Behälters und dem zu befüllenden Reifen andererseits derselbe Schlauch vorgesehen sein, wobei das Umschaltventil dazu ausgebildet ist, in Abhängigkeit von seiner Schaltstellung entweder eine direkte Strömungsverbindung zwischen dem Druckerzeugungsmittel und dem Schlauch oder eine Strömungsverbindung zwischen dem Druckerzeugungsmittel und dem Einlass des Behälters einerseits sowie zwischen dem Auslass des Behälters und dem Schlauch andererseits bereitzustellen.

Je nach Schaltstellung bewirkt das Umschaltventil also entweder einen direkten Luftdurchfluss von dem Druckerzeugungsmittel in den Schlauch - ohne Umleitung durch den Behälter - oder eine Luftzufuhr in den Behälter, welche eine Abgabe von Abdichtmittel aus dem Behälter in den Schlauch nach sich zieht. Bei einem direkten Luftdurchfluss tritt Druckluft ohne Abdichtmittel aus dem Schlauchende aus, sodass die Vorrichtung in der entsprechenden Schaltstellung zum reinen Aufpumpen eines an sich intakten Reifens genutzt werden kann. Bei einer Umleitung des von dem Druckerzeugungsmittel gelieferten Luftstroms durch den Behälter wird Abdichtmittel aus dem Behälter in den Schlauch gedrückt, weshalb die Vorrichtung in dieser Schaltstellung zum Abdichten und Aufpumpen eines platten Reifens eingesetzt werden kann. Dadurch dass ein und derselbe Schlauch für beide Betriebsarten der Vorrichtung - "Nur Aufpumpen" und "Abdichten und Aufpumpen" - verwendet wird, ist die Bedienbarkeit erleichtert, da der Benutzer nur auf das Betätigen des Umschaltventils und nicht auf die Auswahl des korrekten Schlauchs achten muss. Darüber hinaus ergibt sich durch den Wegfall eines Schlauches eine Einsparung von Material, Gewicht und Herstellungskosten. Insbesondere kann die Vorrichtung auch Platz sparender gestaltet werden, was hinsichtlich der Unterbringung im Kofferraum eines Kraftfahrzeugs von besonderer Bedeutung ist.

Die DE-A-101 06 468 offenbart eine Vorrichtung gemäs dem Oberbegriff des Anspruchs 1 mit einem Dichtmittelbehälter und einem diesem zugeordneten Entnahmeelement. In das Entnahmeelement ist ein Ventil integriert, welches zwischen zwei Stellungen hin und her schaltbar ist. In einer ersten Stellung des Ventils bleiben sowohl der Einlass als auch der Auslass des Dichtmittelbehälters verschlossen und aus einer Luftquelle strömt Luft ohne Durchquerung des Behälters direkt in einen Schlauch zum Aufpumpen eines Reifens. In der zweiten Stellung des Ventils ist jeweils ein Verbindungskanal zwischen der Luftquelle und dem Inneren des Behälters sowie zwischen dem Inneren des Behälters und dem Schlauch eingerichtet.

Es besteht ein Bedürfnis, die Handhabung von Vorrichtungen der genannten Art weiter zu verbessern.

Die Aufgabe wird durch eine Vorrichtung mit den Merkmalen des Anspruchs 1 gelöst.

Erfindungsgemäß umfasst das Umschaltventil ein Ventilgehäuse mit einem ersten Anschlussstutzen zur Verbindung des Umschaltventils mit dem Druckerzeugungsmittel und einem zweiten Anschlussstutzen zur Verbindung des Umschaltventils mit dem Schlauch. Die Anschlussstutzen können mit gängigen Schraubgewinden, Klemmabschnitten oder Schlauchkupplungen versehen sein. Gemäß einer Ausgestaltung bildet das Ventilgehäuse selbst eine Entnahmeeinheit für den Behälter. Weiterhin ist erfindungsgemäß vorgesehen, dass der erste Anschlussstutzen derart um 180° versetzt zu dem zweiten Anschlussstutzen an dem Ventilgehäuse angeordnet ist, dass eine geradlinige Luftströmung zwischen dem ersten Anschlussstutzen und dem zweiten Anschlussstutzen ermöglicht ist, wenn das Umschaltventil eine direkte Strömungsverbindung zwischen dem Druckerzeugungsmittel und dem Schlauch bereitstellt. Dies hat den Vorteil, dass bei einem direkten Luftdurchfluss von dem Druckerzeugungsmittel zu dem Schlauch eine im Wesentlichen geradlinige Strömung auftritt und somit ein effizientes Aufpumpen des Reifens gewährleistet ist.

Gemäß einer Ausführungsform ist das Umschaltventil als 4/2-Wegeventil ausgebildet, d.h. das Umschaltventil weist vier Anschlüsse und zwei Schaltstellungen auf. Mit einem derartigen Ventil kann die Luft von dem Druckerzeugungsmittel selektiv über einen ersten Strömungsweg oder über einen zweiten Strömungsweg zu dem Schlauch geleitet werden. Vorzugsweise ist das Wegeventil handbetätigt. Es könnte jedoch auch ein elektrisches, pneumatisches oder hydraulisches Wegeventil eingesetzt werden.

Gemäß einer weiteren Ausführungsform ist eine, bevorzugt lösbar mit dem Behälter verbundene, insbesondere auf den Behälter aufschraubbare, Entnahmeeinheit vorgesehen, in welche das Umschaltventil integriert ist. Die Entnahmeeinheit kann insbesondere einen ersten Anschluss für den Einlass des Behälters, also zur Zuführung von Druckluft, sowie einen zweiten Anschluss für den Auslass des Behälters, also für die Entnahme des Abdichtmittels aus dem Behälter, aufweisen. Ein entleerter Behälter kann auf einfache und schnelle Weise ausgetauscht werden, indem beispielsweise der entleerte Behälter von der Entnahmeeinheit abgeschraubt und ein gefüllter Behälter aufgeschraubt wird. Durch die Integration des Umschaltventils in die Entnahmeeinheit können gegenüber dem Vorsehen eines separaten Ventils Material, Gewicht, Montagekosten und Bauraum gespart werden.

Das Umschaltventil kann einen Ventilsitz und einen in dem Ventilsitz beweglich angeordneten Ventilkörper aufweisen, wobei insbesondere O-Ringe zur Abdichtung der Übergangsstellen zwischen Strömungskanälen des Ventilsitzes und Strömungskanälen des Ventilkörpers vorgesehen sind. Auf diese Weise kann auch unter relativ hohem Druck stehende Luft zuverlässig von dem Druckerzeugungsmittel zu dem Behälter und/oder zu dem Schlauch geleitet werden.

Gemäß einer Ausgestaltung der Erfindung ist der Ventilkörper ein, insbesondere quer zu einer direkten Durchströmungsrichtung, beweglicher Schieber. Alternativ kann der Ventilkörper auch ein Drehschalter sein. Beide Varianten gewährleisten eine einfache Bedienbarkeit des Umschaltventils. Darüber hinaus könnten auch Tastumschalter, Kippumschalter oder dergleichen verwendet werden.

Das Umschaltventil ist vorzugsweise in einem Auslieferungszustand in diejenige Schaltstellung gestellt, welche eine direkte Verbindung zwischen dem Druckerzeugungsmittel und dem Schlauch bereitstellt. Die Vorrichtung kann in dem Auslieferungszustand zum Aufpumpen von Reifen ohne Abdichten verwendet werden. Wenn ein Abdichten eines Reifens erwünscht ist, wird das Umschaltventil von der Aufpumpstellung in die Abdichtstellung gestellt, bei welcher die Druckluft durch den Behälter geleitet wird. Bevorzugt ist das Umschaltventil derart ausgebildet, dass es bei Erreichen der Abdichtstellung in dieser verbleibt, d.h. dass Mittel vorgesehen sind, welche ein Zurückschalten in die Aufpumpstellung verhindern. Beispielsweise könnte der Ventilkörper in der Abdichtstellung verrasten.

Gemäß einer weiteren Ausgestaltung der Erfindung ist das Umschaltventil in einer Gebrauchsstellung der Vorrichtung an einem unteren Ende des Behälters angeordnet. Dadurch wird eine möglichst vollständige Entleerung des Behälters begünstigt. Der Behälter kann in der Gebrauchsstellung der Vorrichtung liegend angeordnet sein. Um auch bei einer liegenden Anordnung des Behälters eine gute Entleerbarkeit zu gewährleisten, kann sich der Auslass in der Gebrauchsstellung unterhalb des Behälterbodens befinden.

Gemäß einer weiteren Ausführungsform ist ein Gehäuse zur Aufnahme mindestens eines Teils der Vorrichtungsbestandteile vorgesehen. Das Gehäuse kann beispielsweise an einem gut zugänglichen Ort im Kofferraum eines Kraftfahrzeugs untergebracht werden. Auch das Gehäuse kann grundsätzlich in Gebrauchslage der Vorrichtung liegend angeordnet sein. Weitere Ausgestaltungen der Erfindung sind den Unteransprüchen, der Beschreibung sowie den beigefügten Zeichnungen zu entnehmen.

Die Erfindung wird im folgenden unter Bezugnahme auf die Zeichnungen anhand eines Ausführungsbeispiels beschrieben.
- Fig. 1: zeigt eine schematische Darstellung einer erfindungsgemäßen Vorrichtung zum Einbringen von Luft und/oder Abdichtmittel in einen Reifen.
- Fig. 2: zeigt eine teilweise geschnittene Draufsicht auf ein Umschaltventil der Vorrichtung gemäß Fig. 1 in einer ersten Schaltstellung.
- Fig. 3: zeigt eine Querschnittansicht des Umschaltventils gemäß Fig. 2 in einer ersten Schaltstellung.
- Fig. 4: zeigt eine Querschnittansicht des Umschaltventils gemäß Fig. 2 in einer zweiten Schaltstellung.
- Fig. 5: zeigt eine Draufsicht auf ein Umschaltventil gemäß einer alternativen Ausführungsform der Erfindung in einer ersten Schaltstellung.
- Fig. 6: zeigt das Umschaltventil gemäß Fig. 5 in einer zweiten Schaltstellung.

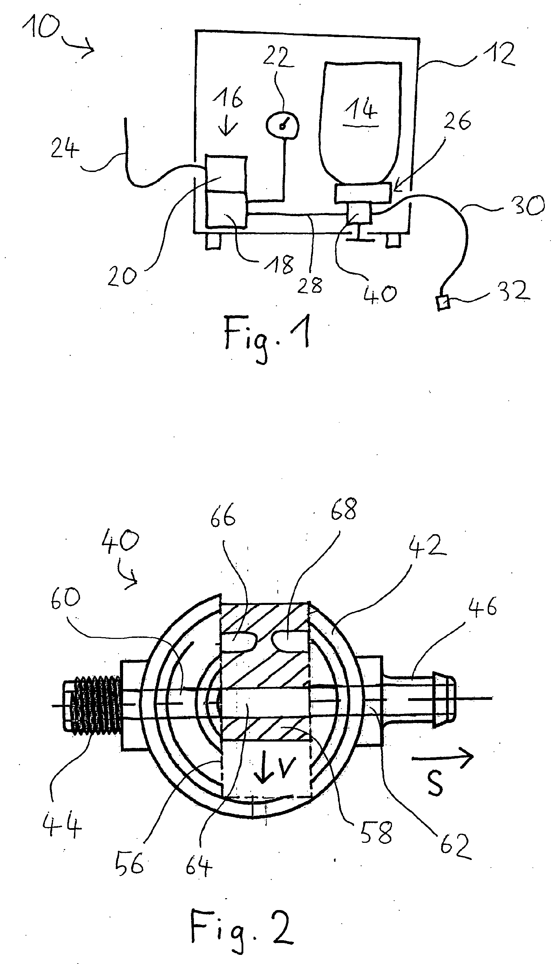

Fig. 1 zeigt schematisch eine in Gebrauchslage angeordnete erfindungsgemäße Vorrichtung 10, welche ein Gehäuse 12 aufweist. In dem Gehäuse 12 ist ein Behälter 14 mit Abdichtmittel angeordnet. Ferner beinhaltet das Gehäuse 12 eine Kompressoreinheit 16, welche einen Kompressor 18 und einen Elektromotor 20 als Antrieb für den Kompressor 18 umfasst. Die Kompressoreinheit 16 ist ferner mit einem Manometer 22 zur Anzeige des mit dem Kompressor 18 erzeugten Luftdrucks ausgestattet.

Außerdem umfasst die Kompressoreinheit 16 ein elektrisches Anschlusskabel 24, über das die Kompressoreinheit 16 mit elektrischer Energie, beispielsweise von einem Zigarrenanzünder eines Kraftfahrzeugs, versorgt werden kann. Nach Anschluss dieses Anschlusskabels 24 an beispielsweise dem Zigarrenanzünder kann der Elektromotor 20 zum Antreiben des Kompressors 18 durch Betätigung eines nicht dargestellten Schalters aktiviert werden.

Der Behälter 14 weist einen Einlass sowie einen Auslass auf, welche beide in eine Entnahmeeinheit 26 münden. Die Entnahmeeinheit 26 ist auf das in Gebrauchslage unten befindliche Ende des Behälters 14 aufgeschraubt, um eine vollständige Entleerung des Behälters 14 bei Entnahme von Abdichtmittel zu begünstigen.

Der Kompressor 18 ist über eine Zufuhrleitung 28 mit der Entnahmeeinheit 26 verbunden. Weiterhin ist ein Schlauch 30 an die Entnahmeeinheit 26 angeschlossen, dessen anderes Ende ein entsprechendes Anschlussstück 32 zum Anschließen des Schlauchs 30 an ein Reifenventil, beispielsweise eine sogenannte VG8-Verschraubung, aufweist.

In die Entnahmeeinheit 26 ist ein Umschaltventil 40 integriert, welches in Fig. 2 in einer Draufsicht genauer dargestellt ist. Das Umschaltventil 40 umfasst ein Ventilgehäuse 42 mit einem Eingangs-Anschlussstutzen 44 und einem Ausgangs-Anschlussstutzen 46. Wie aus Fig. 2 hervorgeht, ist der Eingangs-Anschlussstutzen 44 um 180° versetzt zu dem Ausgangs-Anschlussstutzen 46 an dem Ventilgehäuse 42 angeordnet. In einem betriebsfertigen Zustand der Vorrichtung 10 ist der Eingangs-Anschlussstutzen 44 mit dem Kompressor 18 verbunden und der Ausgangs-Anschlussstutzen 46 ist mit dem Schlauch 30 verbunden.

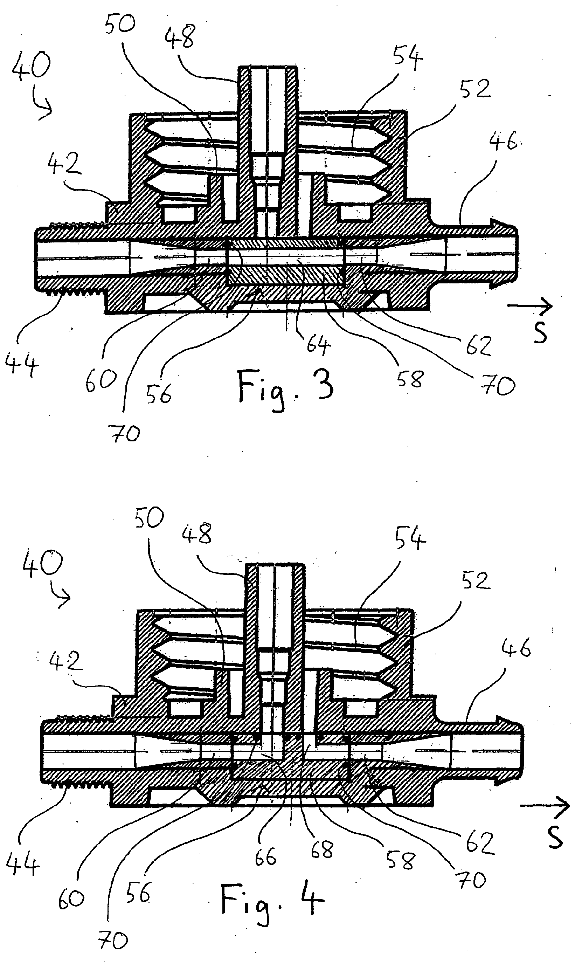

Das Umschaltventil 40 dient dazu, in Abhängigkeit von seiner Schaltstellung entweder eine direkte Strömungsverbindung zwischen dem Kompressor 18 und dem Schlauch 30 oder eine Strömungsverbindung zwischen dem Kompressor 18 und dem Einlass des Behälters 14 einerseits sowie zwischen dem Auslass des Behälters 14 und dem Schlauch 30 andererseits bereitzustellen, wie nachfolgend unter zusätzlicher Bezugnahme auf Fig. 3 und 4 genauer erläutert wird.

Das Umschaltventil 40 ist als 4/2-Wegeventil ausgebildet und weist neben dem Eingangs-Anschlussstutzen 44 und dem Ausgangs-Anschlussstutzen 46 einen Behältereinlass-Anschlussstutzen 48 sowie einen Behälterauslass-Anschlussstutzen 50 auf. Der Behältereinlass-Anschlussstutzen 48 und der Behälterauslass-Anschlussstutzen 50 sind um 90° versetzt zu dem Eingangs-Anschlussstutzen 44 und dem Ausgangs-Anschlussstutzen 46 an dem Ventilgehäuse 42 angeordnet und verlaufen koaxial ineinander verschachtelt. Ein zu dem Behältereinlass-Anschlussstutzen 48 ebenfalls koaxialer Mantel 52 mit einem Innengewinde 54 dient dazu, das Ventilgehäuse 42 auf ein entsprechendes Gegengewinde des Behälters 14 aufzuschrauben, sodass das Umschaltventil 40 letztlich die Entnahmeeinheit 26 bildet. Bei auf den Behälter 14 aufgeschraubtem Ventilgehäuse 42 ist sowohl der Behältereinlass-Anschlussstutzen 48 als auch der Behälterauslass-Anschlussstutzen 50 mit dem Inneren des Behälters 14 verbunden. Dabei kann der Behälter 14 einen Einlass und einen davon getrennten Auslass aufweisen, wobei der Einlass mit dem Behältereinlass-Anschlussstutzen 48 und der Auslass mit dem Behälterauslass-Anschlussstutzen 50 in Verbindung steht. Alternativ kann der Behälter 14 auch eine Öffnung aufweisen, in die bei aufgeschraubtem Ventilgehäuse 42 sowohl der Behältereinlass-Anschlussstutzen 48 als auch der Behälterauslass-Anschlussstutzen 50 münden und die somit gleichzeitig als Einlass und als Auslass dient. Bei einer derartigen Konfiguration ist der Einlass des Behälters 14 also mit dem Auslass des Behälters 14 identisch.

Bei der Ausführungsform gemäß Fig. 2-4 weist das Umschaltventil 40 einen Ventilsitz 56 sowie einen in dem Ventilsitz 56 linear verschiebbaren Schieber 58 auf. In dem Ventilsitz 56 ist ein eingangsseitiger Strömungskanal 60 und ein ausgangsseitiger Strömungskanal 62 ausgebildet, welche miteinander fluchten und eine Direktströmungsrichtung S definieren. In dem Schieber 58 ist ein Durchgangskanal 64 sowie ein erster Umleitungskanal 66 und ein zweiter Umleitungskanal 68 ausgebildet. Zur Abdichtung der Übergangsstellen zwischen den Strömungskanälen 60, 62 des Ventilsitzes 56 einerseits und dem Durchgangskanal 64 sowie den Umleitungskanälen 66, 68 des Schiebers 58 andererseits sind O-Ringe 70 vorgesehen. Durch Betätigung eines nicht dargestellten Hebels oder Schiebestellers kann ein Benutzer den Schieber 58 quer zu der Direktströmungsrichtung S von einer ersten Schaltstellung in eine einem Endanschlag entsprechende zweite Schaltstellung verschieben, was in Fig. 2 durch einen Pfeil V dargestellt ist.

In der in Fig. 2 und 3 dargestellten ersten Schaltstellung fluchten die in dem Ventilsitz 56 ausgebildeten Strömungskanäle 60, 62 mit dem in dem Schieber 58 ausgebildeten Durchgangskanal 64, sodass eine direkte Strömungsverbindung mit geradliniger Luftströmung entlang der Direktströmungsrichtung S zwischen dem Kompressor 18 und dem Schlauch 30 bereitgestellt ist.

In der in Fig. 4 dargestellten zweiten Schaltstellung ist über die Umleitungskanäle 66, 68 eine Verbindung zwischen dem eingangsseitigen Strömungskanal 60 und dem Behälter 14 sowie zwischen dem Behälter 14 und dem ausgangsseitigen Strömungskanal 62 hergestellt, während die direkte Strömungsverbindung zwischen dem Kompressor 18 und dem Schlauch 30 gesperrt ist. In der zweiten Schaltstellung wird also die gesamte von dem Kompressor 18 gelieferte Druckluft über den Umleitungskanal 66 zu dem Einlass des Behälters 14 umgeleitet. Druckluft und/oder Abdichtmittel, welche über den Auslass aus dem Behälter 14 austritt, wird über den weiteren Umleitungskanal 68 dem Schlauch 30 zugeführt.

Nach Aktivierung des Elektromotors 20 (Fig. 1) erzeugt der Kompressor 18 an seinem Ausgang einen Luftstrom, der je nach Einstellung des Umschaltventils 40 entweder direkt oder unter Einbeziehung des Behälters 14 zu dem Schlauch 30 geleitet wird. Gelangt der Luftstrom zunächst in den Behälter 14, so wird durch den dadurch entstehenden Druckanstieg in dem Behälter 14 das Abdichtmittel zusammen mit der Luft über den Ausgangs-Anschlussstutzen 46 und den Schlauch 30 in einen am Ende des Schlauchs 30 angeschlossenen undichten Reifen eingeblasen, um diesen Reifen abzudichten. Anschließend kann der Reifen auf diesem Weg mit Luft aufgeblasen werden, um den vorgeschriebenen Reifendruck einzustellen. Wird das Umschaltventil 40 hingegen so eingestellt, dass die von dem Kompressor 18 gelieferte Druckluft dem Schlauch 30 direkt zugeführt wird, ohne dass diese zuerst in den Behälter 14 gelangt, so kann damit ein am anderen Ende des Schlauchs 30 angeschlossener Reifen ohne Zufuhr von Abdichtmittel mit Luft aufgepumpt werden.

Das Umschaltventil 40 ist bei Auslieferung in die erste Schaltstellung gestellt, d.h. es ist eine direkte Verbindung zwischen dem Kompressor 18 und dem Schlauch 30 bereitgestellt. Ferner ist das Umschaltventil 40 derart ausgebildet, dass der Schieber 58 in der zweiten Schaltstellung einrastet, sobald er in diese geschoben wird.

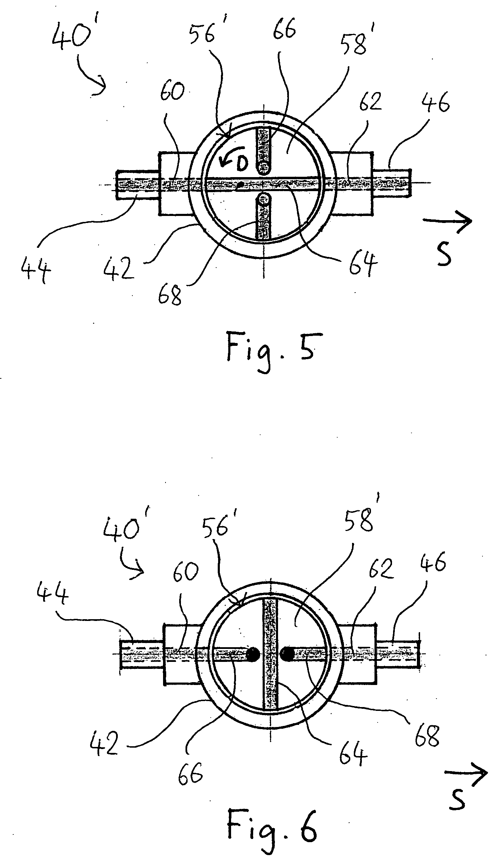

In den Fig. 5 und 6 ist eine alternative Ausführungsform eines Umschaltventils 40' dargestellt, wobei gleichartige Bauteile mit den gleichen Bezugszeichen versehen sind. Der Ventilkörper ist hier als Drehschalter 58' ausgebildet. In der in Fig. 5 dargestellten ersten Schaltstellung des Umschaltventils 40' sorgt ein Durchgangskanal 64 des Drehschalters 58' für eine direkte Strömungsverbindung zwischen dem Kompressor 18 und dem Schlauch 30. Bei einem Verdrehen des Drehschalters 58' in dem zugehörigen Ventilsitz 56' um 90° - in Fig. 5 durch einen Pfeil D dargestellt - kann das Umschaltventil 40' in die in Fig. 6 dargestellte zweite Schaltstellung gestellt werden. Wie bei der in Zusammenhang mit Fig. 2-4 beschriebenen Ausführungsform ist in dieser Schaltstellung ein Umleiten der von dem Kompressor 18 bereitgestellten Druckluft in den Behälter 14 und ein Umleiten der aus dem Behälter 14 austretenden Luft und/oder Abdichtmittel in den Schlauch 30 vorgesehen.

Je nach Schaltstellung des Umschaltventils 40, 40' kann also entweder ein in Stand zu setzender Reifen mit Abdichtmittel und Luft befüllt werden oder ein funktionstüchtiger Reifen direkt mit Luft aus dem Kompressor 18 aufgepumpt werden. Das Aufpumpen des intakten Reifens oder das Abdichten des undichten Reifens erfolgt dabei mit ein und demselben Schlauch 30, sodass der Benutzer vor der Inbetriebnahme der Vorrichtung lediglich das Umschaltventil 40 in die korrekte Stellung bringen muss. Im Falle eines Austauschs des Behälters 14 kann die Entnahmevorrichtung 26 mit dem integrierten Umschaltventil 40 grundsätzlich erneut zum Einsatz kommen, was insbesondere unter Umweltgesichtspunkten vorteilhaft ist. Nach einer Erneuerung des Behälters 14 im Anschluss an einen erfolgten Abdichtvorgang ist keine neuerliche Montage des Kompressors 18 in einer Fachwerkstatt erforderlich.

### Bezugszeichenliste

- 10: Vorrichtung
- 12: Gehäuse
- 14: Behälter
- 16: Kompressoreinheit
- 18: Kompressor
- 20: Elektromotor
- 22: Manometer
- 24: elektrisches Anschlusskabel
- 26: Entnahmeeinheit
- 28: Zufuhrleitung
- 30: Schlauch
- 32: Anschlussstück
- 40, 40': Umschaltventil
- 42: Ventilgehäuse
- 44: Eingangs-Anschlussstutzen
- 46: Ausgangs-Anschlussstutzen
- 48: Behältereinlass-Anschlussstutzen
- 50: Behälterauslass-Anschlussstutzen
- 52: Mantel
- 54: Innengewinde
- 56, 56': Ventilsitz
- 58: Schieber
- 58': Drehschalter
- 60: eingangsseitiger Strömungskanal
- 62: ausgangsseitiger Strömungskanal
- 64: Durchgangskanal
- 66: Umleitungskanal
- 68: Umleitungskanal
- 70: O-Ring

- S: Direktströmungsrichtung
- V: Verschiebung
- D: Verdrehung

## Patentansprüche

1. Vorrichtung (10) zum Einbringen von Luft und/oder Abdichtmittel in einen Reifen, insbesondere Kraftfahrzeugreifen, mit einem Behälter (14) für das Abdichtmittel, welcher einen Einlass und einen Auslass aufweist, wobei der Auslass mit einem Schlauch verbunden oder verbindbar ist, dessen anderes Ende mit dem zu befüllenden Reifen verbindbar ist, und
einem Druckerzeugungsmittel (18), insbesondere einer elektrischen Pumpe oder einem Kompressor, das mittels eines Umschaltventils (40, 40') wahlweise mit dem Einlass des Behälters (14) oder mit einem Schlauch verbindbar ist, dessen anderes Ende mit dem zu befüllenden Reifen verbindbar ist, wobei
zur Verbindung zwischen dem Druckerzeugungsmittel (18) und dem zu befüllenden Reifen einerseits sowie zwischen dem Auslass des Behälters (14) und dem zu befüllenden Reifen andererseits derselbe Schlauch (30) vorgesehen ist, und wobei
das Umschaltventil (40, 40') dazu ausgebildet ist, in Abhängigkeit von seiner Schaltstellung entweder eine direkte Strömungsverbindung zwischen dem Druckerzeugungsmittel (18) und dem Schlauch (30) oder eine Strömungsverbindung zwischen dem Druckerzeugungsmittel (18) und dem Einlass des Behälters (14) einerseits sowie zwischen dem Auslass des Behälters (14) und dem Schlauch (30) andererseits bereitzustellen,
**dadurch gekennzeichnet, dass**
das Umschaltventil (40, 40') ein Ventilgehäuse (42) mit einem ersten Anschlussstutzen (44) zur Verbindung des Umschaltventils (40, 40') mit dem Druckerzeugungsmittel (18) und einem zweiten Anschlussstutzen (46) zur Verbindung des Umschaltventils (40, 40') mit dem Schlauch (30) umfasst, wobei der erste Anschlussstutzen (44) derart um 180° versetzt zu dem zweiten Anschlussstutzen (46) an dem Ventilgehäuse (42) angeordnet ist, dass eine geradlinige Luftströmung zwischen dem ersten Anschlussstutzen (44) und dem zweiten Anschlussstutzen (46) ermöglicht ist, wenn das Umschaltventil (40, 40') eine direkte Strömungsverbindung zwischen dem Druckerzeugungsmittel (18) und dem Schlauch (30) bereitstellt.

2. Vorrichtung nach Anspruch 1,
**dadurch gekennzeichnet, dass**
das Umschaltventil (40, 40') als 4/2-Wegeventil ausgebildet ist.

3. Vorrichtung nach Anspruch 1 oder 2,
**dadurch gekennzeichnet, dass**
eine, bevorzugt lösbar mit dem Behälter (14) verbundene, insbesondere auf den Behälter (14) aufschraubbare, Entnahmeeinheit (26) vorgesehen ist, in welche das Umschaltventil (40, 40') integriert ist.

4. Vorrichtung nach zumindest einem der vorstehenden Ansprüche,
**dadurch gekennzeichnet, dass**
das Umschaltventil (40, 40') einen Ventilsitz (56, 56') und einen in dem Ventilsitz (56, 56') beweglich angeordneten Ventilkörper (58, 58') aufweist, wobei insbesondere O-Ringe (70) zur Abdichtung der Übergangsstellen zwischen Strömungskanälen (60, 62) des Ventilsitzes (56, 56') und Strömungskanälen (64, 66, 68) des Ventilkörpers (58, 58') vorgesehen sind.

5. Vorrichtung nach Anspruch 4,
**dadurch gekennzeichnet, dass**
der Ventilkörper (58) ein, insbesondere quer zu einer direkten Durchströmungsrichtung (S), beweglicher Schieber ist.

6. Vorrichtung nach Anspruch 4,
**dadurch gekennzeichnet, dass**
der Ventilkörper (58') ein Drehschalter ist.

7. Vorrichtung nach zumindest einem der vorstehenden Ansprüche,
**dadurch gekennzeichnet, dass**
das Umschaltventil (40, 40') in einem Auslieferungszustand in diejenige Schaltstellung gestellt ist, welche eine direkte Verbindung zwischen dem Druckerzeugungsmittel (18) und dem Schlauch (30) bereitstellt.

8. Vorrichtung nach Anspruch 7,
**dadurch gekennzeichnet, dass**
das Umschaltventil (40, 40') derart ausgebildet ist, dass es bei Erreichen der anderen Schaltstellung in dieser verbleibt.

9. Vorrichtung nach zumindest einem der vorstehenden Ansprüche,
**dadurch gekennzeichnet, dass**
das Umschaltventil (40, 40') in einer Gebrauchsstellung der Vorrichtung (10) an einem unteren Ende des Behälters (14) angeordnet ist.

10. Vorrichtung nach zumindest einem der vorstehenden Ansprüche,
**dadurch gekennzeichnet, dass**
ein Gehäuse (12) zur Aufnahme mindestens eines Teils der Vorrichtungsbestandteile vorgesehen ist.

## Claims

1. An apparatus (10) for introducing air and/or sealant into a tire, in particular a motor vehicle tire, comprising
a container (14) for the sealant which has an inlet and an outlet, wherein the outlet is connected or connectable to a hose whose other end is connectable to the tire to be filled; and
a pressure generating means (18), in particular an electric pump or a compressor, which is selectively connectable by means of a switch valve (40, 40') to the inlet of the container (14) or to a hose whose other end is connectable to the tire to be filled, wherein
the same hose (30) is provided for the connection between the pressure generating means (18) and the tire to be filled, on the one hand, and between the outlet of the container (14) and the tire to be filled, on the other hand; and wherein
the switch valve (40, 40') is configured to provide, in dependence on its switch position, either a direct flow connection between the pressure generating means (18) and the hose (30) or a flow connection between the pressure generating means (18) and the inlet of the container (14), on the one hand, and between the outlet of the container (14) and the hose (30), on the other hand,
**characterized in that**
the switch valve (40, 40') comprises a valve housing (42) having a first connection stub (44) for connecting the switch valve (40, 40') to the pressure generating means (18) and having a second connection stub (46) for connecting the switch valve (40, 40') to the hose (30), with the first connection stub (44) being arranged at the valve housing (42) offset by 180° with respect to the second connection stub (46) such that an air flow in a straight line is enabled between the first connection stub (44) and the second connection stub (46) when the switch valve (40, 40') provides a direct flow connection between the pressure generating means (18) and the hose (30).

2. An apparatus in accordance with claim 1,
**characterized in that**
the switch valve (40, 40') is configured as a 4/2 way valve.

3. An apparatus in accordance with claim 1 or claim 2,
**characterized in that**
an extraction unit (26) into which the switch valve (40, 40') is integrated is provided, said extraction unit preferably being releasably connected to the container (14) and in particular being screwable to the container (14).

4. An apparatus in accordance with at least one of the preceding claims,
**characterized in that**
the switch valve (40, 40') has a valve seat (56, 56') and a valve body (58, 58') movably arranged in the valve seat (56, 56'), with O rings (70) in particular being provided for sealing the transition points between flow passages (60, 62) of the valve seat (56, 56') and flow passages (64, 66, 68) of the valve body (58, 58').

5. An apparatus in accordance with claim 4,
**characterized in that**
the valve body (58) is a slider which is in particular movable transversely to a direct throughflow direction (S).

6. An apparatus in accordance with claim 4,
**characterized in that**
the valve body (58') is a rotary switch.

7. An apparatus in accordance with at least one of the preceding claims,
**characterized in that**,
in a delivery state, the switch valve (40, 40') is set into that switch position which provides a direct connection between the pressure generating means (18) and the hose (30).

8. An apparatus in accordance with claim 7,
**characterized in that**
the switch valve (40, 40') is configured such that when it reaches the other switch position it remains therein.

9. An apparatus in accordance with at least one of the preceding claims,
**characterized in that**
the switch valve (40, 40') is arranged at a lower end of the container (14) in a position of use of the apparatus (10).

10. An apparatus in accordance with at least one of the preceding claims,
**characterized in that**
a housing (12) is provided for receiving at least some of the apparatus components.

## Revendications

1. Dispositif (10) pour introduire de l'air et/ou un moyen d'étanchéification dans un pneu, en particulier dans un pneu de véhicule automobile, comportant un récipient (14) pour le moyen d'étanchéification, qui présente une entrée et une sortie, la sortie étant reliée ou susceptible d'être reliée à un tuyau dont l'autre extrémité est susceptible d'être reliée au pneu à remplir, et un moyen de génération de pression (18), en particulier une pompe électrique ou un compresseur, qui est susceptible d'être relié au choix à l'entrée du récipient (14) ou à un tuyau à l'aide d'une valve de commutation (40, 40'), dont l'autre extrémité est susceptible d'être reliée au pneu à remplir,
dans lequel
pour la liaison entre le moyen de génération de pression (18) et le pneu à remplir d'une part et entre la sortie du récipient (14) et le pneu à remplir d'autre part, il est prévu le même tuyau (30), et
la valve de commutation (40, 40') est réalisée pour établir, en fonction de sa position de commutation, soit une liaison d'écoulement directe entre le moyen de génération de pression (18) et le tuyau (30), soit une liaison d'écoulement entre le moyen de génération de pression (18) et l'entrée du récipient (14) d'une part et entre la sortie du récipient (14) et le tuyau (30) d'autre part,
**caractérisé en ce que**
la valve de commutation (40, 40') comprend un carter de valve (42) muni d'un premier manchon de raccordement (44) pour la liaison de la valve de commutation (40, 40') avec le moyen de génération de pression (18), et d'un second manchon de raccordement (46) pour la liaison de la valve de commutation (40, 40') avec le tuyau (30),
le premier manchon de raccordement (44) étant agencé sur le carter de valve (42) en décalage de 180° par rapport au second manchon de raccordement (46), de manière à permettre un écoulement d'air rectiligne entre le premier manchon de raccordement (44) et le second manchon de raccordement (46) lorsque la valve de commutation (40, 40') établit une liaison d'écoulement directe entre le moyen de génération de pression (18) et le tuyau (30).

2. Dispositif selon la revendication 1,
**caractérisé en ce que**
la valve de commutation (40, 40') est réalisée sous forme de valve à 4 voies/2 positions.

3. Dispositif selon la revendication 1 ou 2,
**caractérisé en ce que**
il est prévu une unité de prélèvement (26) reliée de préférence de façon détachable au récipient (14), en particulier par vissage sur le récipient (14), dans laquelle est intégrée la valve de commutation (40, 40').

4. Dispositif selon l'une au moins des revendications précédentes,
**caractérisé en ce que**
la valve de commutation (40, 40) comprend un siège de valve (56, 56') et un corps de valve (58, 58') agencé mobile sur le siège de valve (56, 56'), dans lequel sont prévus en particulier des joints toriques (70) pour étancher les emplacements de transition entre des canaux d'écoulement (60, 62) du siège de valve (56, 56') et des canaux d'écoulement (64, 66, 68) du corps de valve (58, 58').

5. Dispositif selon la revendication 4,
**caractérisé en ce que**
le corps de valve (58) est un tiroir mobile en particulier transversalement à une direction d'écoulement directe (S).

6. Dispositif selon la revendication 4,
**caractérisé en ce que**
le corps de valve (58') est un commutateur rotatif.

7. Dispositif selon l'une au moins des revendications précédentes,
**caractérisé en ce que**
dans un état de livraison, la valve de commutation (40, 40') est positionnée dans cette position de commutation qui établit une liaison directe entre le moyen de génération de pression (18) et le tuyau (30).

8. Dispositif selon la revendication 7,
**caractérisé en ce que**
la valve de commutation (40, 40') est réalisée de telle sorte que lorsqu'elle atteint l'autre position de commutation, elle demeure dans celle-ci.

9. Dispositif selon l'une au moins des revendications précédentes,
**caractérisé en ce que**
dans une position d'utilisation du dispositif (10), la valve de commutation (40, 40') est agencée à une extrémité inférieure du récipient (14).

10. Dispositif selon l'une au moins des revendications précédentes,
**caractérisé en ce que**
il est prévu un carter (12) pour loger une partie au moins des éléments constitutifs du dispositif.
